# EUROPÄISCHE PATENTSCHRIFT

(11) **EP 2 252 849 B1**
(45) Veröffentlichungstag und Bekanntmachung des Hinweises auf die Patenterteilung: **23.01.2013**
(21) Anmeldenummer: 09710657.9
(22) Anmeldetag: 13.02.2009
(51) Int. Cl.: F27B 17/02, B01J 19/00, B01L 7/00

(54) **MEHRZONENOFEN**
MULTI-ZONE OVEN
FOUR MULTIZONE

(30) Priorität: 15.02.2008 DE 102008009254
(43) Veröffentlichungstag der Anmeldung: 24.11.2010
(73) Patentinhaber: hte Aktiengesellschaft, 69123 Heidelberg (DE)
(72) Erfinder: DEJMEK, Michael, 69488 Birkenau (DE); MAZZONCINI, Luca, 69221 Dossenheim (DE); HAAS, Andreas, 69214 Eppelheim (DE); FRIESS, Markus, 67473 Lindenberg (DE); KOECHEL, Oliver, 67308 Bubenheim (DE); VASSILIADIS, Georg, 67549 Worms (DE)
(74) Vertreter: Tostmann, Holger Carl
(86) Internationale Anmeldenummer: PCT/EP2009/001021
(87) Internationale Veröffentlichungsnummer: WO 2009/100922

(56) Entgegenhaltungen:
- EP-A- 1 297 889
- JP-A- 2006 234 324

## Beschreibung

Die vorliegende Erfindung betrifft einen Mehrzonenofen zur Beheizung und Temperierung von Reaktoren einschließlich deren Zu- und Ableitungen. Vorzugsweise werden diese Ofen in Apparaturen zur Testung von Katalysatoren im Laborbetrieb eingesetzt.

Der Mehrzonenofen bildet eine thermisch isolierende Umhausung, die mit Durchführungen ausgestattet ist, wobei die Durchführungen jeweils eine thermisch abgeschirmte Verbindung zwischen einzelnen Ofenzonen beziehungsweise auch zwischen dem Außenbereich und dem Innenbereich des Ofens ermöglichen.

Dabei betrifft die vorliegende Erfindung insbesondere einen Mehrzonenofen für alle Arten von Apparaturen, insbesondere von Katalyseapparaturen, umfassend eine mit Isolierplatten (17, 17' ...) versehene Rahmenstruktur (14). Die Rahmenstruktur definiert dabei zumindest eine Kammer (01), welche zwei oder mehr Zonen (10, 20 ...) unterschiedlicher Temperatur aufweist, die durch mindestens ein Einlegeelement (15) voneinander getrennt sind.

Laborofen sind prinzipiell aus dem Stand der Technik bekannt, wobei jedoch die meisten Laborofen nur eine einzige Heizkammer aufweisen. Diese eine Heizkammer kann nicht in verschiedene Ofenbereiche beziehungsweise Ofenzonen aufgeteilt und entsprechend auch nicht auf lokal unterschiedliche Solltemperaturen beheizt werden. Traditionell eignen sich Laborofen zum Trocknen oder zum trockenen Aufbewahren von Gegenständen.

JP 2006 234324 A offenbart einen Ofen, bei dem Zonen mit unterschiedlichen Temperaturenmittels Einlegeelemente eingeteilt werden.

EP 878 680 A1 offenbart einen Ofen zum Trocknen von lackierten Proben, die in einer im Ofen befindlichen Haltevorrichtung sowohl von der Oberseite als auch von der Unterseite mit Warmluft angeströmt werden können, wobei die zur Oberseite und zur Unterseite geführten Luftströme über separate Temperiervorrichtungen erwärmt werden.

Eine der Aufgaben der vorliegenden Erfindung besteht darin, einen Ofen bereitzustellen, der es ermöglicht, eine Vorrichtung an unterschiedlichen Positionen innerhalb dieses Ofens auf unterschiedlichen Temperaturen zu halten. Der Ofen soll dabei möglichst einfach zu handhaben sein sowie möglichst einfach Zugang zu den im Ofen befindlichen Vorrichtungsteilen ermöglichen. Auch sollen während des Betriebes des Ofens Änderungen der Temperatur in unterschiedlichen Zonen des Ofens möglich sein und/oder die Einteilung der Zonen geändert werden können.

Die vorgenannten und andere Aufgaben werden dadurch gelöst, dass ein Mehrzonenofen (1) gemäss Anspruch 1 zur Beheizung und Temperierung von Reaktoren, Behältern und Leitungen bereitgestellt wird.

Dabei befinden sich bevorzugt zumindest zwei Zonen auf einer jeweils unterschiedlichen Temperatur. Der mittlere Temperaturunterschied zwischen zwei Zonen (auch: Temperaturzonen) beträgt dabei zumindest 10 K, bevorzugt zumindest 50 K, weiter bevorzugt zumindest 100 K.

Ein Temperaturunterschied zwischen verschiedenen Zonen wird bevorzugt durch getrennte und getrennt regelbare Mittel zum Heizen/Kühlen erreicht sowie - weiter bevorzugt - durch den Einsatz von Heiz- und/oder Kühlkassetten.

Der Begriff "Kammer" bezeichnet im Sinn der vorliegenden Erfindung jeden Bereich des Ofens, der in allen drei Raumrichtungen von einer Rahmenstruktur eingefasst ist, und bevorzugt eine Fronttüre (pro Kammer) aufweist, welche vorzugsweise an zumindest einer Rahmenverstrebung befestigt wird. Die Rahmenstruktur entsteht bevorzugt durch die Verbindung von einzelnen Rahmenverstrebungen.

**Rahmenverstrebungen** sind bevorzugt Rahmen aus Metall, Fasermaterialien (Graphitfaser) und/oder Verbundmaterialien. Metallrahmen sind vorzugsweise aus Stahl oder Aluminium bzw. entsprechenden Legierungen. Weiter vorzugsweise werden Rahmen mit Profil eingesetzt. In einer bevorzugen Ausführungsform ist die Rahmenstruktur des Ofens aus Stahlrahmen aufgebaut, der mit Isolationsmaterial umgeben ist.

Bevorzugt werden als Rahmenverstrebungen Standardrahmen ausgewählt, welche sich mit bekannten Fügetechniken verbinden lassen. So wird der Rahmen aufgrund der Betriebstemperatur vorzugsweise aus Stahlprofilen aufgebaut, welche kurzfristig und kostengünstig verfügbar sind. Vorzugsweise wird ein schweißbarer Stahl gewählt. Alternative können zugeschnittene Profile auch verschraubt oder vernietet werden. Zur Einsparung von Gewicht und Materialkosten sind Stahlprofile vorzuziehen. Diese bieten gegenüber Flachstählen erhöhte Steifigkeit und werden als Massenware hergestellt. Bevorzugt werden Winkelprofile jeder Art (L, T, Doppel-T) aber auch Kastenprofile verwendet. Dabei spielen gegebenenfalls anzubringende Anbauteile wie Flansche, Laschen, Scharniere, Knotenbleche, Ösen usw. eine Rolle bei der konkreten Auswahl eines Profils.

Im Anschluss an die Herstellung des metallischen Rahmen wird dieser vorzugsweise durch einen Farbanstrich gegen korrosiven oder andere Angriffe geschützt. Ersatzweise kann der Rahmen auch gepulvert oder mit anderen Schutzschichten überzogen werden.

In einer bevorzugten Ausführungsform der vorliegenden Erfindung sind zumindest zwei der insgesamt zumindest zwei Zonen (10, 20, ...) einer Kammer (01) durch mindestens ein **Einlegeelement** (15) voneinander getrennt.

In einer bevorzugten Ausführungsform umfasst zumindest ein Einlegeelement beziehungsweise umfassen bevorzugt alle Einlegelemente Gleitschienen, so dass die Einlegeelemente schubladenartig aus dem Ofen herausgezogen werden können.

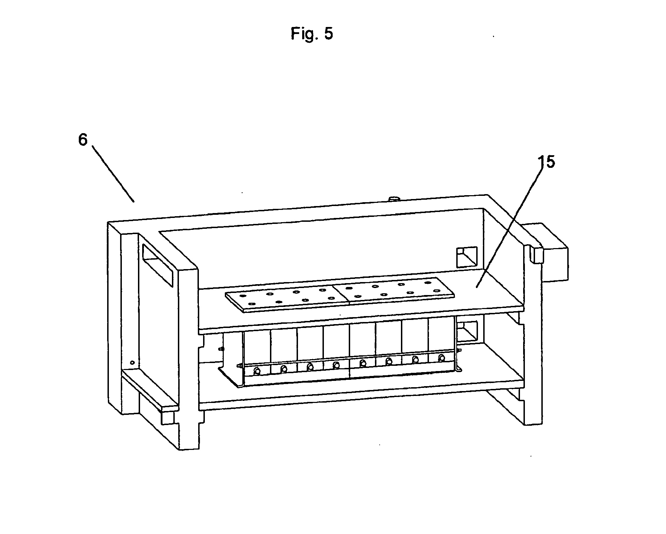

In einer weiteren bevorzugten Ausführungsform sind Mittel vorhanden, um die Position der Einlegeelemente - während diese im Ofen befindlich sind - durch eine Rotationsbewegung zu verändern. Hierbei wird bevorzugt die obere Fläche eines Einlegeelement in die Richtung der Vorderseite des Ofens gedreht. Diese bevorzugte Anordnung, gemäß derer ein Einlegelement aus einer ebenen Lage in eine gekippte Lage drehbar ist, bedingt den Vorteil, dass beispielsweise Einsteckreaktoren, die unter Umständen eine signifikante längliche Ausdehnung haben und die im hinteren Bereich der Ofenzone positioniert werden, besser ein- und ausgebaut werden können (vgl. Figur 5).

Vorzugsweise ist ein Einlegeelement (15) mit einer oder mit mehreren Durchführung(en) (43) versehen.

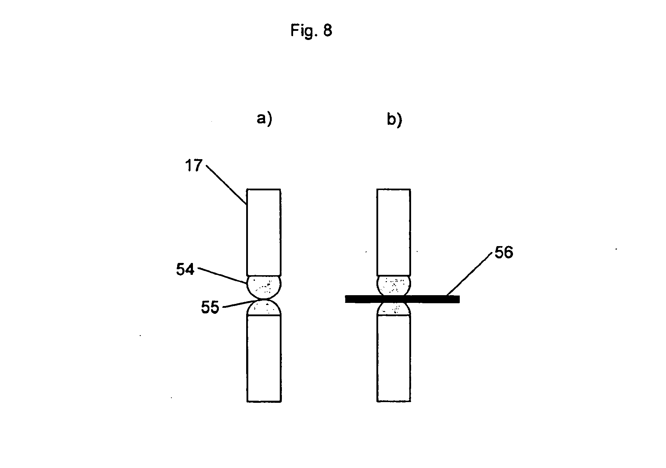

Im Sinne der vorliegenden Erfindung sollen Durchführungen den Übergang von Bauteilen und dabei insbesondere von Leitungen aller Art von einer Zone in eine andere Zone ermöglichen. Diese Leitungen können Zu- und Ableitungen für Fluide, aber auch elektrische Leitungen sein. Die Durchführungen sind bevorzugt so ausgestaltet, dass zwar das Bauteil / die Leitung durch die Durchführung geführt werden kann, gleichzeitig aber eine größtmögliche thermische Isolierung zwischen den zwei angrenzenden Zonen gewährleistet ist (vgl. Figur 8).

Insbesondere für den hier bevorzugten Einsatz der erfindungsgemäßen Mehrzonenöfen in Katalysetestständen ist es vielfach erforderlich, dass zahlreiche Versorgungsleitungen durch Durchführungen in den Ofen hineinführen und auch aus dem Ofen hinausführen. Weiterhin ist auch eine Kommunikation zwischen den einzelnen Kammern erforderlich, die mittels den Durchführungen bewerkstelligt wird. Die Durchführungen gemäß einer bevorzugten Ausführungsform sind deshalb so flexibel ausgestaltet, dass es möglich ist, die in den Öfen befindlichen Apparaturen umzurüsten, ohne dass bauliche Veränderungen an den Öfen erforderlich sind.

Es ist also bevorzugt, dass ein erfindungsgemäßer Ofen standardmäßig mit einer bestimmten Anzahl von Durchführungen versehen ist, die dann bedarfsweise aktiviert werden können. In einer bevorzugten Ausführungsform umfassen die Durchführungen ein thermisch stabiles Material, wobei es weiter bevorzugt ist, die Rohrleitungen und andere Versorgungsleitungen durch die Durchführungen hindurch zu stecken, ohne dass bauliche Veränderunasmaßnahmen am Ofen erforderiich sind.

Eine alternative Möglichkeit zur Erzeugung von Temperaturzonen besteht darin, dass mehrere etwas kleinere Ofenkästen in einem größeren selbstragenden Gehäuse, also der Kammer, fixiert werden, wobei die Bereiche zwischen den Ofenkästen dabei bevorzugt in einer Weise ausgelegt sind, dass diese nicht oder nur schlecht thermisch leitend sind. Vorzugsweise kann dies durch Ausschäumen mit hitzebeständigen Schäumen oder Auskleidung mit anderen thermischen Isolationsmaterialien erreicht werden.

In einer bevorzugten Ausführungsform ist dann jeder der kleineren Ofenkästen an der Rückwand mit Heizkassetten ausgestattet. Der Begriff "Einlegeelement" würde sich in diesem speziellen Fall auf die Verbindung von einer Deck- beziehungsweise Bodenplatte zweier Ofenkästen beziehen, die durch eine Isolationsschicht voneinander thermisch entkoppelt sind. Neben einem selbsttragenden Gehäuse kann aber auch in diesem Fall eine Rahmenkonstruktion genutzt werden.

Die Anordnung von kleinen Ofenkästen in einem selbstragenden Gehäuse zum Aufbau der Temperaturzonen ist insbesondere bei einer höheren Stückzahl vorteilhaft. Demgegenüber ist die Verwendung von einfachen Einlegeelementen bei solchen Multizonenöfen besonders vorteilhaft, die häufiger umgebaut werden müssen.

Weiter vorzugsweise steht jede einzelne Zone (10, 20, ...) mit zumindest einer Heizkassette (12, 12' ...) in Wirkverbindung. Hierbei ist es bevorzugt, dass die Heizkassetten (12, 12' ...) von außen lösbar mit dem Mehrzonenofen verbunden ist, und insbesondere dem Ofen ohne weitere Einschränkung der Funktionsfähigkeit desselben auch während des Betriebes des Ofens entnommen bzw. ausgetauscht werden kann. Eine Heizkassette ermöglicht das geregelte Temperieren einer Zone. Eine Klappe an der Rückseite oder einer der beiden Seiten des Multizonenofens, welche zur Heizung/Kühlung geschlossen beziehungsweise geöffnet werden kann, ist auch als "Heizkassette" im Sinne der vorliegenden Erfindung anzusehen.

In einer weiter bevorzugten Ausführungsform des erfindungsgemäßen Ofens kann zumindest eine Heizkassette (12, 12' ...) durch zumindest eine Kühlkassette ausgewechselt werden.

In einer bevorzugten Ausführungsform ist der erfindungsgemäße Mehrzonenofen modular aufgebaut. Dabei bedeutet "modular", dass einzelne Teile des Ofens demselben entnommen oder zugefügt werden können, ohne den Ofen in seiner Gesamtfunktion zu beeinträchtigen.

### Kurze Beschreibung der Figuren:

- Figur 1a): zeigt den schematischen Aufbau eines erfindungsgemäßen Mehrzonenofen, der eine einzige Heizkammer besitzt, die mittels Einlegeelementen in vier unterschiedliche (horizontale) Temperaturzonen aufgeteilt ist.
- Figur 1b): zeigt eine schematische Darstellung eines erfindungsgemäßen Mehrzonenofens, der drei unterschiedliche (vertikal angeordnete) Heizkammern besitzt, wobei zwei der Heizkammern mit jeweils drei unterschiedlichen Temperaturzonen und die dritte Heizkammer mit zwei Temperaturzonen versehen sind.
- Figur 2: zeigt einen schematischen Aufbau des erfindungsgemäßen Mehrzonenofens, der mit zwei Kammern ausgestattet ist und insgesamt fünf Heizzonen aufweist.
- Figur 3: zeigt eine Darstellung einer weiteren Ausführungsform des erfindungsgemäßen Mehrzonenofens, der zwei Heizkammern mit insgesamt acht Heizzonen aufweist.
- Figur 4: zeigt eine Ansicht des in Fig. 3 dargestellten Mehrzonenofens mit seitlichem Blick auf die Rückseite, wobei dort eine obere Heizkassette (12) vom Ofen gelöst ist.
- Figur 5: zeigt einen Teilausschnitt eines Innenbereichs eines Mehrzonenofens, der mit unterschiedlichen Bodenplatten ausgestattet ist, in welche ein Reaktorblock eingelassen ist.
- Figur 6: zeigt einen Teil des Innenbereichs eines Mehrzonenofens, der mit einer Bodenplatte ausgestattet ist, in welche sechzehn kreisförmige Durchführungen und Sammelgefäße eingelassen sind.
- Figur 7: zeigt eine schematische Darstellung der Fixierung des Einlegeelementes, das eine obere von einer unteren Ofenzone trennt, wobei die Blechplatte der oberen Zone von der Blechplatte der unteren Zone getrennt ist.
- Figur 8a): zeigt eine flexible Durchführung in der Wand einer Isolierplatte, die von der Oberseite und von der Unterseite her mit einem thermoplastischen Isolationsmaterial auskleidet ist.
- Figur 8b): zeigt eine flexible Durchführung, in die eine Verbindungsleitung eingeführt wurde.

Zu den bevorzugten Abmessungen eines erfindungsgemäßen Mehrzonenofens ist anzumerken, dass die Breite und die Höhe des Ofens jeweils bevorzugt in einem Bereich von 1 bis 2 m liegt und weiter bevorzugt der Ofen eine Tiefe aufweist, die im Bereich von 0,5 bis 1 m liegt.

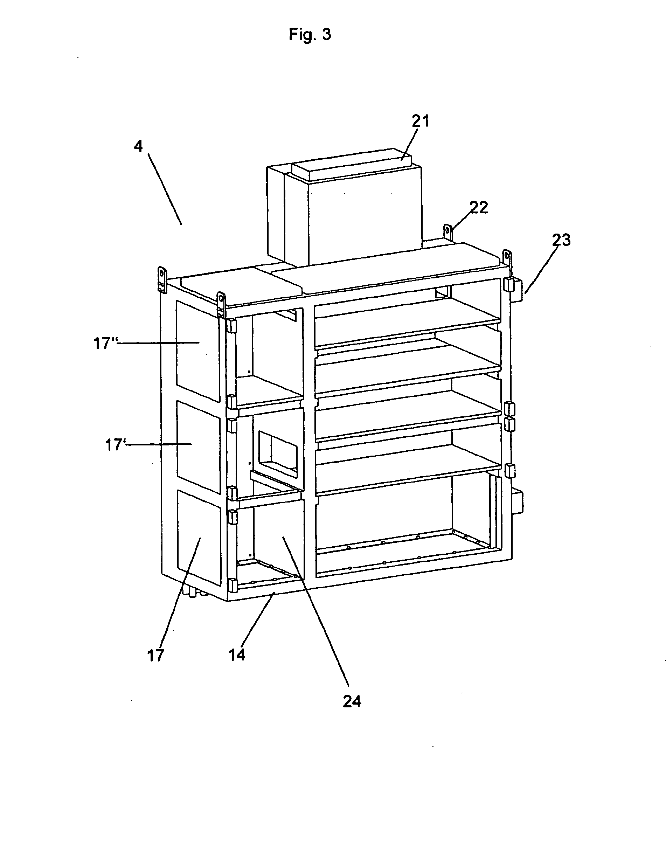

Der erfindungsgemäße Mehrzonenofen zeichnet sich durch eine hohe mechanische Stabilität aus. Die hohe mechanische Stabilität wird vorzugsweise durch die modulare Rahmenbauweise sowie durch die Einteilung der Kammer in jeweils mit Einlegeelementen versehene Zonen bewirkt (siehe beispielsweise Figur 3).

In einer bevorzugten Ausführungsform ist es möglich, im Innenbereich des Ofens Bauteile zu befestigen, deren Gewicht mehr als 50 kg beträgt, vorzugsweise mehr als 100 kg.

Die besondere mechanische Stabilität des gesamten Ofens und auch die Stabilität der Bauteile des Mehrzonenofens bewirken, dass sich die Bauteile auch unter extremen Betriebsbedingungen, insbesondere unter hohen Temperaturen, nur unwesentlich verformen oder deformieren, so dass der erfindungsgemäße Mehrzonenofen in seiner Rahmenstruktur einem herkömmlichen Laborofen deutlich überlegen ist.

Die **Isolierplatten** (16, 17, 18), die vorzugsweise an den Außenseiten des erfindungsgemäßen Mehrzonenofens mit der Rahmenstruktur verbunden werden, sind bevorzugt aus einem Hartfasermaterial, das weiter vorzugsweise verpresst oder geklebt ist.

Als Materialien zur Herstellung der Isolierplatten (16, 17, 18) als auch der Einlegeelemente (15) eignen sich insbesondere die zu Laminaten verpressten Werkstoffe, die eine Glimmerfraktion in Verbindung mit Silikonharzimprägnierung umfassen. Darüber hinaus eignen sich mit anorganischen Fasern verstärkte Silikat-Werkstoffe sowie Spezialkeramiken, die unter hoher thermischer Dauerbelastung eingesetzt werden können (derartige Isolierplatten können beispielsweise unter dem Namen GL-M und GL-P von der Firma Brandenburger Isoliertechnik bezogen werden, wobei die Temperaturbeständigkeit dieser Platten beispielsweise im Bereich von 400°C bis 500°C, die Druckfestigkeit im Bereich von 300 bis 400 N/mm² und die Wärmeleitzahl im Bereich von 0,1 bis 0,3 W/mK liegen können.)

Die Isolierplatten sind massiv und bieten den Vorteil, dass Durchführungen mittels Bohren oder Sägen in den Platten angebracht werden können. Dieses Hartfasermaterial ist einem Dämmmaterial aus Glaswolle oder Isoliergewebe deutlich überlegen, wobei insbesondere eine deutlich höhere Flexibilität bezüglich der Verarbeitung gegeben ist, was insbesondere bei der Maßanfertigung von Öfen für Katalyseapparaturen einen Vorteil bietet, da sich die Anzahl und Dimensionierung der Durchführungen oftmals von Anlage zu Anlage sehr stark unterscheiden.

In einer bevorzugten Ausführungsform des erfindungsgemäßen Multizonenofen weisen die Isolierplatten (16, 17, 18) eine Wandstärke auf, die in einem Bereich von 1 bis 10 cm liegt, wobei ein Bereich von 2 bis 8 cm bevorzugt und ein Bereich von 4 bis 6 cm besonders bevorzugt wird.

Eine Isolierplatte umfasst auch flächige Wärmewiderstände, wie beispielsweise stapelförmig angeordnete Platten, Platten mit Honigwabenstruktur, wobei die isolierende Wirkung auch durch Ausschäumen von Zwischenräumen erreicht werden kann. Ebenso ist es möglich die Einlegelemente aus unterschiedlichen Materialien aufzubauen und diese mit Isolationsmaterialien in einer geeigneten Weise zu verbinden.

Die Isolierplatten, wie sie vorzugsweise bei der Herstellung der Seitenwände (17, 18) verwendet werden, und die Platten, die zur Herstellung der Einlegeelemente (15) verwendet werden, können aus dem gleichen oder aus unterschiedlichen Materialien bestehen. Die jeweiligen Einlegelemente können sich in der Weise von einander unterscheiden, dass diese entweder gleichzeitig die Funktion als tragendes und als isolierendes Element oder nur als tragendes beziehungsweise nur als isolierendes Element übernehmen.

In einer bevorzugten Ausführungsform des Mehrzonenofens ist jede einzelne Seitenwand mit einer einzelnen Isolierplatte versehen. In einer anderen Ausführungsform sind die einzelnen Seitenwände des Mehrzonenofens mit mehreren kleineren Isolierplatten versehen, die kachelartig angebracht sind (siehe Figur 3). Die Verwendung von mehreren kleineren Isolierplatten kann bei der Umrüstung des Ofens vorteilhaft sein.

Die **Durchführungen** (41, 42, 43) innerhalb der Isolierplatten (16, 17, 18) und innerhalb der Einlegeelemente (15) dienen vorzugsweise der Aufnahme von Leitungen, Ventilen, Thermoelementen und weiteren technischen Mitteln, die in Verbindung mit der im Ofen befindlichen Apparatur erforderlich sind. Ein besonderer technischer Vorteil bei den Durchführungen gemäß der vorliegenden Erfindung ist es, dass diese zwar eine Kommunikation beziehungsweise eine Wirkverbindung zwischen den einzelnen Zonen und Kammern oder zwischen dem Außenbereich und dem Innenbereich gewährleisten, dabei aber die Wirkung der Verbindung als Kältebrücke so gering wie möglich ist. Insbesondere bei den Wirkverbindungen zwischen den einzelnen Zonen im Innenraum ist dies von großer Bedeutung und stellt eine signifikante Verbesserung gegenüber einer bloßen Aneinanderreihung von mehreren herkömmlichen Laboröfen dar.

Da die erfindungsgemäße Apparatur modular aufgebaut ist, bietet sie den Vorteil, dass sie besonders einfach und zeitsparend umgerüstet werden kann, um beispielsweise für eine anders aufgebaute Apparatur oder unter anderen Betriebsbedingungen verwendet zu werden.

Ein vorteilhafter Aspekt des erfindungsgemäßen Mehrzonenofens ist es, dass die einzelnen Ofenzonen beziehungsweise die einzelnen Kammern mittels der Heizkassetten auf unterschiedlichen Temperaturen geheizt und/oder gekühlt werden können. Dabei sind vorzugsweise die einzelnen Zonen und/oder Kammern, die über eine eigene Heizkassette verfügen, auch mit individuellen Mitteln zur Temperatursteuerung bzw. zur Temperaturkontrolle ausgestattet. Bevorzugt ist jede Heizkassette mit jeweils einem Temperaturregler ausgestattet, wobei weiter vorzugsweise zumindest zwei Temperaturfühler innerhalb der entsprechenden Temperaturzone angebracht sind.

Beim Temperaturregler handelt es sich vorzugsweise um PID-Regler, die üblicherweise in einem externen Schaltschrank integriert sind, wodurch-eine thermische Entkopplung von den heißen Ofenbereichen sichergestellt wird.

In einer bevorzugten Ausführungsform des erfindungsgemäßen Mehrzonenofens erfolgt die **Temperaturkontrolle** der einzelnen Ofenzonen durch jeweils einen (oder mehrere) PID-Regler (z.B. Eurotherm). Zumindest ein Temperaturregler pro Heizkassette ist bevorzugt. Die Messdaten können bevorzugt gleichzeitig über eine Datenverarbeitungsanlage gespeichert werden.

Eine Heizkassette ist vorzugsweise von der Außenseite aus in lösbarer Weise mit einer oder mit mehreren Zonen verbunden. In einer weiter bevorzugten Ausführungsform bilden die Heizkassetten den Teil einer Ofentür beziehungsweise Ofenklappe. Durch die leichte Handhabbarkeit ist ein Austausch von Heizkassetten besonders vorteilhaft.

Heizkassetten werden vorzugsweise über Türen oder Klappen an der Rückwand des Ofens ausgetauscht bzw. eingeführt oder entnommen. Dies hat den Vorteil, dass der Innenraum des Ofens auch von der Rückseite her zugänglich ist, was die Wartungsarbeiten sowie den routinemäßigen Austausch von Reaktionsrohren wesentlich erleichtert.

Die Heizkassetten umfassen vorzugsweise zumindest ein Umluftgebläse, das weiter vorzugsweise die Form eines Propellers aufweist, und das die Luft aus dem Innenraum des Ofens ansaugt. Die vom Umluftgebläse angesaugte Luft wird vorzugsweise gegen ein Heizelement geschleudert, erhitzt und über ein Prellblech bzw. Leitblech in den Innenraum einer Heizzone eingeleitet. Als vorteilhaft an der Bauweise ist auch hervorzuheben, dass die Fluiddynamik der aus den Heizkassetten ausströmenden Heißluft innerhalb der jeweiligen Ofenzone mittels sogenannter Leitbleche oder Leitkörper im Ofen vorgegeben werden kann ohne den Ofen selber umbauen zu müssen.

Leitbleche sind bevorzugt Lochplatten, Lamellenplatten oder Wabenkörper. Durch geeignet Leitbleche kann die Heißluft von unterschiedlichen Positionen aus in den Ofen eingeführt werden, beispielsweise vom Seitenbereich. Darüber hinaus ist auch eine nicht symmetrische Heißluftverteilung im Ofen möglich, die zu einem definierten Temperaturgradienten führt. Eine symmetrische Wärmeverteilung in einer Zone ist jedoch insgesamt bevorzugt.

Die einzelnen Heizkassetten (12, 12' ...) eines Mehrzonenofens können sich sowohl in der Dimensionierung als auch in den Leistungsmerkmalen von einander unterscheiden, wobei es auch möglich ist, dass eine größere Heizkassette in Verbindung mit mehr als nur einer einzigen Heizzone steht.

Eine einzelne Heizkassette kann dabei vorzugsweise mit mehr als einem Umluftheizgebläse ausgestattet sein.

In einer anderen bevorzugten Ausführungsform des Mehrzonenofens können die Heizkassetten zum Teil auch zum Kühlen eingesetzt werden, so dass die in den einzelnen Zonen oder Kammern eingebauten Teile der Apparatur besonders schnell und unabhängig voneinander auf einen niedrigeren Temperaturbereich eingestellt werden können werden. Dadurch kann beispielsweise auch das Abkühlen eines Bündelreaktors auf Raumtemperatur besonders zeitsparend durchgeführt werden, wenn dieser zuvor bei einer hohen Temperatur in der Reaktionszone gefahren wurde, wodurch wiederum der Durchsatz gesteigert wird.

Ein weiterer Vorteil des erfindungsgemäßen Mehrzonenofens liegt darin, dass es möglich ist, eine bestimmte Temperaturzone beziehungsweise Ofenkammer auf Raumtemperatur abzukühlen, wohingegen die benachbarten Temperaturzonen beziehungsweise Ofenkammern auf hoher Betriebstemperatur temperiert werden. Hierdurch können diejenigen Bauteile der Apparatur - wie beispielsweise Ventile, Multiportventile Heißgasanalysatoren - besonders gut vor Abnutzung geschont werden, die ansonsten gegenüber Temperaturveränderungen und Temperaturschwankungen anfällig für Defekte wären.

In einer bevorzugten Ausführungsform des erfindungsgemäßen Mehrzonenofens werden die Heizzonen in einem Bereich von Raumtemperatur bis 300°C temperiert. Es ist auch denkbar, die Zonen auf Temperaturen zu heizen, oberhalb von 250°C liegen, wobei bei derartigen Ausführungsformen dann der Antriebsmotor für den Ventilator des Umluftgebläses außerhalb der Ofenzone-zu-befestigen ist, da die Hitzebeständigkeit des Antriebsmotors begrenzt ist.

Falls einzelne Ofenzonen beziehungsweise alle Ofenzonen zum Betrieb bei hohen Temperaturen ausgelegt werden sollen, also oberhalb von ca. 500°C, so umfassen die Heizkassetten bevorzugt Strahlungsheizungen, die vorzugsweise auch mit Kühlfunktion kombiniert werden können.

Da Wärmetransport durch Strahlung ist erst ab ca. 600 °C relevant wird, ist es bei Temperaturen bis ca. 500°C bevorzugt, die Heizkassette im Modus einer Umluftheizung zu betreiben, d.h. die Heizkassette umfasst dann bevorzugt ein Umluftheizungselement.

In einer bevorzugten Ausführungsform können die Heizkassetten in einfacher Weise gegen Kühlkassetten ausgetauscht werden. Die Auslegung der Geometrien der Bauteile sowie die Verschlusselemente ermöglichen diesen einfachen Austausch. Die Kühlkassetten umfassen vorzugsweise einen Wärmetauscher mit oder ohne Lüfter sowie bevorzugt einen externen Flüssigkeitsumlauf. Mit Hilfe der Kühlkassetten können einzelne Bereich der Anlage besonders schnell und wirksam abgekühlt werden. Dabei ist der Einsatz von Kühlflüssigkeiten bevorzugt, die in einem Temperaturbereich von 10°C bis 300°C eingesetzt werden können. Die Kühlung erfolgt vorzugsweise durch N₂- oder Luftkühlung oder Verdampfungskühlung oder durch Wärmeaustausch über Kühlkreisläufe.

Es ist auch möglich, dass Heiz- und Kühlkassette in einem einzigen Bauteil zusammengefasst sind.

In einer weiteren und bevorzugten Ausführungsform wird zumindest eine der Kammern mit den Heiz-/Kühlkassetten (bzw. Temperierkassetten) auf Temperaturen gekühlt, die unterhalb Raumtemperatur liegen. Dies kann dann besonders vorteilhaft sein, wenn flüssige Reaktionsprodukte in einer Ofenkammer der Katalyseapparatur in einem Abscheidersystem gesammelt werden, die der Offenkammer mit Reaktoreinheit nachgeschaltet ist. Durch die Kühlung der zumindest einen Kammer und der in der Kammer befindlichen Produkte ist es möglich, die Abscheidung und die Produkte auf einer konstanten Temperatur zu temperieren und dadurch reproduzierbare Parameter hinsichtlich der Phasengleichgewichte im Abscheider zu gewährleisten.

Bei den Heiz/Kühlkassetten (Temperierkassetten) handelt es sich vorzugsweise um elektrische Heizschlagen oder um flüssigkeitsdurchflossene Kühlschlangen.

Die erfindungsgemäßen Mehrzonenöfen werden vorzugsweise zur Behausung von Katalysetestständen verwendet, wobei es weiter bevorzugt ist, dass es sich um Katalyseteststände mit parallel angeordneten Reaktoren handelt.

Vorzugsweise werden die Kühlkammern/Kühlkassetten bei Temperaturen von 0°C bis 15°C betrieben, wobei ein Bereich von 5°C bis 10°C weiter bevorzugt ist. Da gegebenenfalls Wasser aus der Luft an gekühlten Bauteilen abgeschieden wird, ist es bevorzugt, dass die gekühlten Kammern mit Kondenswassersammlern ausgestattet werden. Bei Anwesenheit von Kondenswassersammlern werden die gekühlten Kammern vorzugsweise in einem Temperaturbereich von bis zu -30°C betrieben.

Beispiele für den Einsatz von Mehrzonenöfen in Katalyseapparaturen sind Verfahren, in denen Flüssigkeiten zu verdampfen sind, die dann im verdampften Zustand über ein beheiztes Leitungssystem in die einzelnen Reaktoren eingeleitet werden, wobei sich die Temperierung von den Zuleitungen und den Ableitungen unterscheidet sowie insbesondere auch die Reaktoren auf einer anderen Temperatur gehalten werden sollen.

Des weiteren sind Verfahren durchführbar, in denen Vorlagengefäße mit flüssigen Substanzen und Verdampfern in den einzelnen Zonen gelagert werden, wobei dann auch oftmals beheizbare Produktsammelgefäße innerhalb des reaktorausgangsseitigen Leitungssystems angeordnet werden. Das Auskondensieren von Fluiden in Leitungen, die als Zuleitungen oder als Ableitungen dienen, kann in einem Mehrzonenumluftofen effektiv unterbunden werden.

Es ist denkbar, den erfindungsgemäßen Mehrzonenumluftofen auch für allgemeine Labor- beziehungsweise Technikumsuntersuchungen einzusetzen, die außerhalb des Gebiets der Testung von Katalysatoren liegen. Beispielhaft sei die parallelisierte Durchführung von Korrosionstests und Alterungsuntersuchungen genannt, mit deren Hilfe es möglich ist, die Beständigkeit von Prozessanlagen in wirtschaftlicher günstiger Weise nachzustellen.

In einer bevorzugten Ausführungsform sind die Mehrzonenöfen nicht gasdicht gegenüber der Umgebung abgeschlossen. Dies ist vorteilhaft, da die in den Öfen befindlichen Reaktoren Undichtigkeiten aufweisen können, wodurch toxische oder leicht entzündliche gasförmige Substanzen zunächst in den Innenraum der Öfen treten. Da die Öfen vorliegend vorzugsweise nicht gasdicht verschlossen sind, diffundieren die toxischen oder leicht entzündlichen Gase in den Außenraum, wo eine Absaugvorrichtung angebracht ist, um die toxischen oder leichtentzündlichen Gase zu entfernen. Bei diesen Gasen kann es sich beispielsweise um Kohlenmonoxid, Wasserstoff, Schwefeldioxid oder Stickoxyde handeln.

Im Folgenden sollen bevorzugte Ausführungsformen der vorliegenden Erfindung anhand der Figuren näher beschrieben werden.

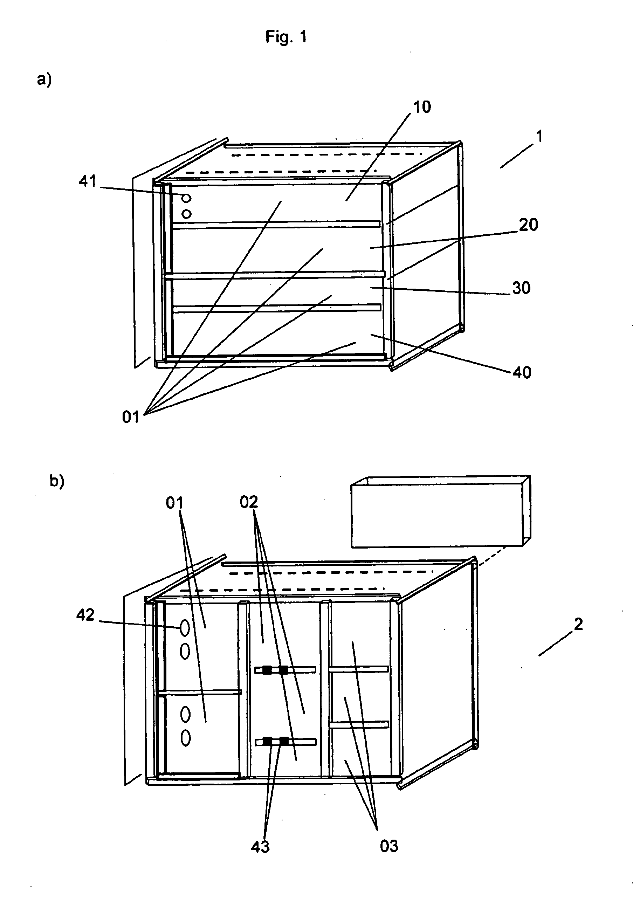

In einer bevorzugten Ausführungsform des erfindungsgemäßen Mehrzonenofens (1), der in Figur 1a) dargestellt ist, weist dieser mehrere unterschiedliche Temperaturzonen (10, 20, 30 und 40) auf, die mit einer einzigen Frontklappe verschlossen werden und die insgesamt eine (Ofen)kammer (01) bilden. Diese Kammer wird durch die äußere Rahmenkonstruktion definiert, welche in der Figur zeichnerisch angedeutet ist.

Die Temperaturzonen sind durch Einlegelemente von einander getrennt, wobei sich die Zonen in der Höhe von einander unterscheiden, so dass beispielsweise die Höhe der Zone (30) kleiner ist als die Höhe der Zone (40). In der nach vorne gerichteten Isolierplatte befinden sich beispielhaft zwei Durchführungen (41)

In einer weiteren bevorzugten Ausführungsform, die in Figur 1b) dargestellt ist, ist der Ofen (2) mit mehr als einer einzigen Kammer ausgestattet, d.h. die Rahmenkonstruktion bildet mehrere Kammern. Beispielhaft sind in Figur 1b) drei unterschiedliche Ofenkammern (01, 02 und 03) zu erkennen. Jede Ofenkammer kann eine unterschiedliche Anzahl an-Temperaturzonen aufweisen, die sich in Größe und Ausgestaltung jeweils voneinander unterscheiden. Üblicherweise ist jede einzelne Kammer durch eine separate Ofentür zugänglich. Es ist auch denkbar, an denjenigen Stellen des Ofens auf die Anbringung einer Türe zu verzichten, die zum Verschließen einer wartungsfreien Temperaturzonen genutzt werden. Statt einer Ofentür könnte beispielsweise eine Isolierplatte an den entsprechenden Bereich der Frontseite angeschraubt werden.

Weiterhin sind in Figur 1b Durchführungen (42) in der nach außen zeigenden Isolierplatte gezeigt, sowie Durchführungen (43) der im Inneren des Ofens befindlichen Einlegelemente. Eine von der Rückseite anzubringende Heizkassette ist gleichfalls angedeutet.

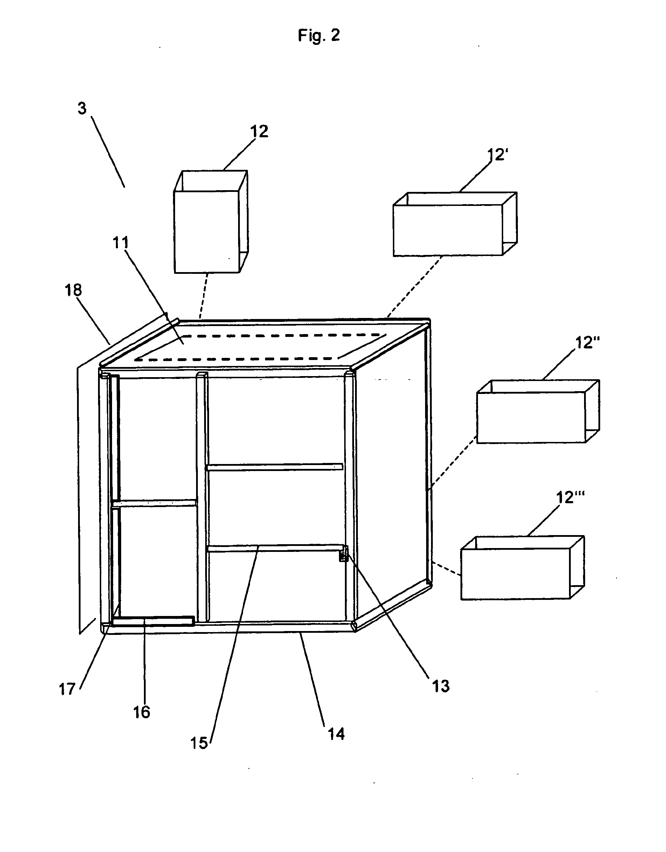

In Figur 2 ist eine bevorzugte Ausführungsform des erfindungsgemäßen Ofens (3) dargestellt, der zwei Kammern [definiert durch die Rahmenstruktur (14)] und insgesamt fünf Temperaturzonen umfasst, wobei die linke Kammer des Ofens zwei und die rechte Kammer drei Heizzonen aufweist, jeweils definiert durch Einlegelemente (15) [welche ihrerseits an den Befestigungsmitteln (13) befestigt sind]. Jeweils die rechte und die linke Kammer des Ofens werden mit eigenen Ofentüren verschlossen, die nicht in der Figur dargestellt sind.

Zu vier der fünf Temperaturzonen sind zugehörige Heizkassetten (12, 12', 12", 12"') gezeigt, welche von außen abnehmbar an der Rückwand befestigt sind. An der Oberseite des Ofens kann sich eine Klappe (11) befinden, durch welche die Zugänglichkeit der oberen Heizzonen von der Außenseite des Ofens verbessert wird. Links neben dem Ofen befindet sich eine Blechplatte als Seitenwand (18), die zur Verkleidung der Rahmenstruktur und des Außenbereichs des Ofens dient. Entsprechend sind auch eine bodenseitige Isolierplatte (16) sowie eine vordere Isolierplatte (17) gezeigt.

In einer bevorzugten Ausführungsform, die beispielhaft in **Figur 3** dargestellt ist, ist der erfindungsgemäße Mehrzonenumluftofen mit einem kleinen Zusatzofen (21) verbunden, der sich in dieser Darstellung auf der Oberseite des Hauptofens (4) befindet. Die Rahmenstruktur definiert drei kleinere Kammern (links) sowie eine Hauptkammer (rechts).

Der in Figur 3 gezeigter Zusatzofen ist für den Bau von komplexeren Katalysetestständen von Bedeutung, falls beispielsweise bestimmte zu temperierende Fluide bevorzugt von der Oberseite in den Mehrzonenofen eingespeist werden sollen. Bei den seitlich befestigten Isolierplatten (17, 17' ...) handelt es sich hier um getrennt vorliegende kleinere Isolierplatten. Durch die Verwendung dieser separaten Isolierplatten kann der Ofen leicht umgerüstet werden, falls beispielsweise andere Bauteile (wie Armaturen, Ventile oder Leitungen) durch die Platten geführt werden sollen. Die Befestigungsmittel (23) werden für den Transport des Ofens und die Befestigung des Ofens innerhalb der Anlage verwendet.

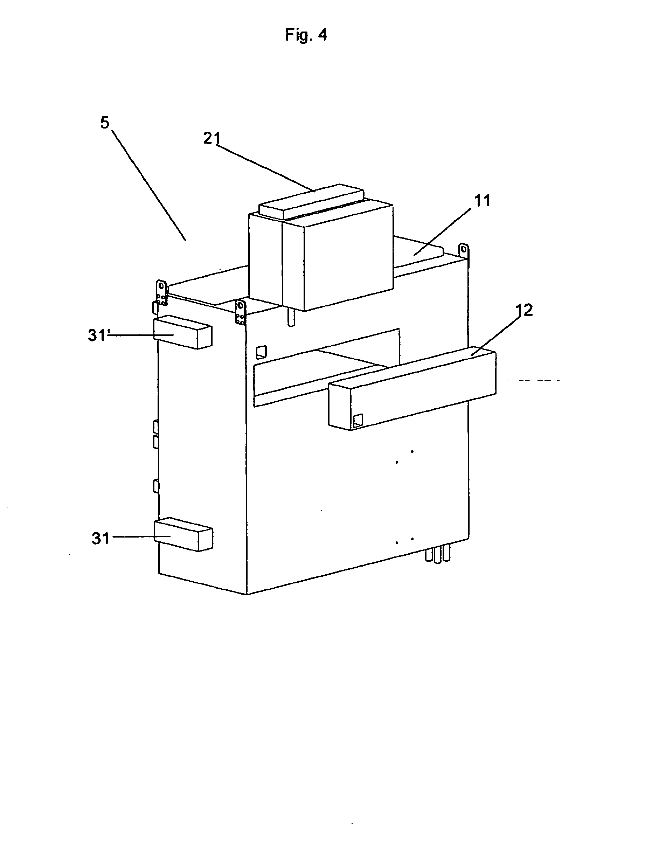

In **Figur 4** ist der gleiche Ofen wie in Figur 3 aus einer alternativen Perspektive gezeigt, und zwar von der Rückseite. Bei den seitlich fixierten Elementen (31, 31') handelt es sich um Lüftungsklappen, die zum Abkühlen des Ofens beziehungsweise der mit der Lüftungsklappe in Verbindung stehenden Ofenklappe dienen. Die seitlichen Lüftungsklappen fungieren dabei als passive Elemente zum Kühlen. Durch die Verwendung von Kühlkassetten, die an der Rückseite des Ofens gegen Heizkassetten (12) ausgetauscht werden, ist eine Kühlung mit einer höheren Effektivität möglich. Es ist daher möglich, auf die Anbringung von seitlichen Lüftungsklappen zu verzichten, wenn die Ofenzone mit einer Kühlkassette schneller oder effizienter abgekühlt werden kann.

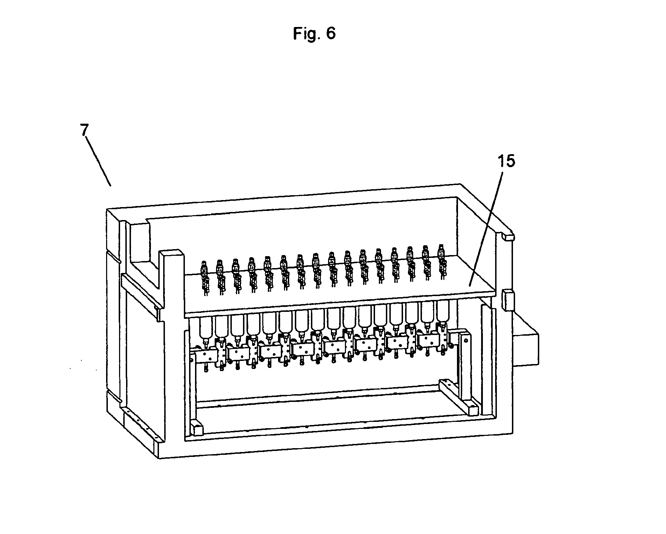

In **Figur 5** und **Figur 6** wird beispielhaft gezeigt, wie unterschiedlich Einlegeelemente (15) im Ofen ausgestaltet sein können, wobei das untere Einlegeelement in **Figur 5** einen Metallkörper mit Einsteckreaktoren trägt, dessen Gewicht bei über 100 kg liegt. In Figur 5 lässt sich auch erkennen, dass es in einer Ausgestaltungsform vorteilhaft sein kann, wenn die obere Seite eines Einlegeelementes (beziehungsweise auch der beiden Einlegelemente) nach vorne verschoben werden kann/können oder schubladenartig aus dem Ofen herausgezogen werden kann/können, um Einsteckreaktoren zu tauschen, die sonst nur schwierig in dem hinteren Teil der Temperaturzone zu handhaben sind. Durch die Bewegbarkeit des Einlegeelements beziehungsweise der Einlegeelemente in Verbindung mit den Reaktoren kann die Anlage insgesamt in einer kompakteren Form gebaut werden.

In **Figur 6** ist ein Einlegelement (15) dargestellt, welches-sechzehn kreisförmige Durchführungen aufweist, durch die jeweils getrennte Leitungen zu Abscheidern für Flüssigkeiten führen.

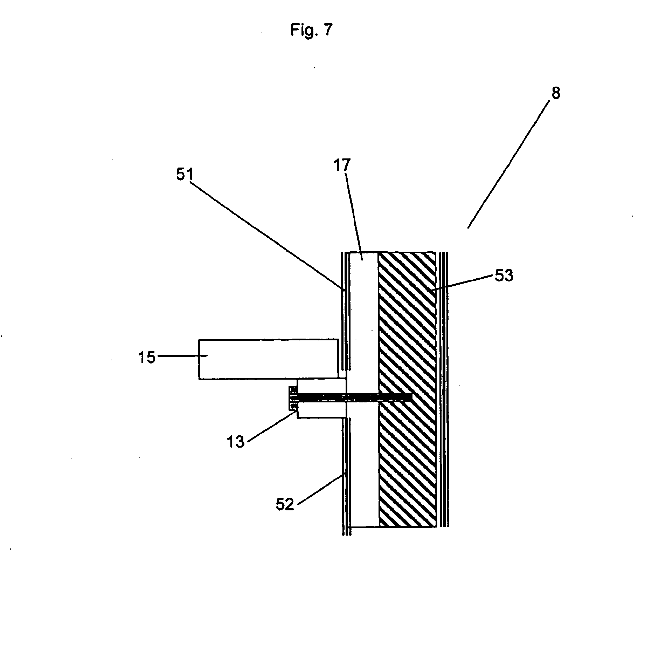

In **Figur 7** ist eine schematische Darstellung der Befestigung des Einlegelements (15) in der Ofenkammer gezeigt, wobei die Blechplatte der oberen Zone (51) von der Blechplatte der unteren Zone (52) getrennt ist. Durch die Trennung dieser metallischen Bauteilen wird die thermische Kommunikation zwischen den unterschiedlichen Temperaturzonen des Ofens weitgehend unterbunden, wobei dies insbesondere dann von großer Bedeutung ist, wenn große Temperaturunterschiede zwischen den einzelnen Zonen und Kammern erreicht werden sollten.

Die Durchführungen (41, 42) können sowohl zur variablen Durchführung von Bauteilen als auch zur Durchführung von permanent installierten Bauteilen verwendet werden. In **Figur 8a)** und **8b****)** ist eine Auskleidung einer Durchführung mit einem thermoplastischen Dichtmaterial gezeigt, das in mehreren Bereichen der Durchführung befestigt werden kann. In **Figur 8a)** und **8b****)** wurde das thermoplastische Material and der Oberseite (54) und and der Unterseite (55) der Isolierplatte (17) befestigt, wobei in **Figur 8b****)** eine Leitung dargestellt ist, die in der Durchführung fixiert ist und zwei unterschiedliche Ofenbereich mit einander verbindet.

### Bezugszeichenliste

- 1, 2, .., 8: - Mehrzonenofen
- 11: - bewegliche Deckplatte
- 01,02...: - (Ofen)kammern
- 10, 20 ...: - (Temperatur)zone
- 12, 12', ...: - Heizkassette
- 13: - Befestigungsmittel für Einlegeelement
- 14: - Rahmenstruktur
- 15: - Einlegelement
- 16: - bodenseitige Isolierplatten
- 17, 17' ...: - wandseitige Isolierplatten
- 18: - Seitenwand - Einhausung
- 21: - Zusatzofen
- 22: - Befestigungsmittel für Mehrzonenofen
- 23: - Befestigungsmittel
- 24: - Verbindungswand
- 31, 31': - Lüftungsklappen
- 41, 42: - Durchführungen
- 43: - Durchführung innerhalb eines Einlegeelements
- 51: - Blechplatte von der oberen Zone
- 52: - Blechplatte von der unteren Zone
- 53: - Ausschnitt der Isolierplatte (17)
- 54, 55: - thermoplastisches Isoliermaterial
- 56: - Leitung

## Patentansprüche

1. Mehrzonenofen für Katalyseapparaturen, umfassend eine mit Isolierplatten (17, 17' ...) versehene Rahmenstruktur (14), wobei die Rahmenstruktur zumindest eine Kammer (01) definiert, welche zwei oder mehr Zonen (10, 20 ...) unterschiedlicher Temperatur aufweist, die durch mindestens ein Einlegeelement (15) voneinander getrennt sind, **dadurch gekennzeichnet, dass** zumindest ein Einlegeelement zumindest eine Durchführung enthält, wobei eine Durchführung eine thermisch abgeschirmte Verbindung zwischen einzelnen Ofenzonen beziehungsweise auch zwischen dem Außenbereich und dem Innenbereich des Ofens ermöglicht.

2. Mehrzonenofen nach Anspruch 1, **dadurch gekennzeichnet, dass** zwei oder mehr Zonen (10, 20 ...) mit jeweils zumindest einer Heizkassette (12, 12' ...) in Wirkverbindung stehen.

3. Mehrzonenofen nach einem der vorstehenden Ansprüche, **dadurch gekennzeichnet, dass** die Heizkassetten (12, 12' ...) von außen lösbar mit dem Mehrzonenofen verbunden sind.

4. Mehrzonenofen nach einem der vorstehenden Ansprüche, **dadurch gekennzeichnet dass** die Heizkassetten (12, 12' ...) eine Heizvorrichtung und/oder eine Kühlvorrichtung umfassen.

5. Mehrzonenofen nach einem der vorstehenden Ansprüche, **dadurch gekennzeichnet dass** die Heizkassetten (12, 12" ...) derart gestaltet sind, dass sie Teil einer Klappe beziehungsweise Tür darstellen oder selber eine Klappe oder eine Tür sind.

6. Mehrzonenofen nach einem der vorstehenden Ansprüche, **dadurch gekennzeichnet, dass** zumindest ein Einlegeelement beweglich mittels Gleitschienen an den Seitenwänden der Ofenkammer angebracht ist.

7. Mehrzonenofen nach einem der vorstehenden Ansprüche, **dadurch gekennzeichnet, dass** die Wandstärke der Isolierplatten (17, 17' ...) in einem Bereich von 1 bis 10 cm liegt.

8. Mehrzonenofen nach einem der vorstehenden Ansprüche, **dadurch gekennzeichnet dass** sich zumindest zwei Heizkassetten (12, 12' ...) in der Dimensionierung und in den Leistungsmerkmalen von einander unterscheiden.

9. Mehrzonenofen nach einem der vorstehenden Ansprüche, **dadurch gekennzeichnet, dass** zumindest eine einzelne Heizkassette (12) mit mehreren Zonen (10, 20 ... ) des Ofens in Wirkverbindung steht, unter der Maßgabe, dass der Ofen mit zwei oder mehr Heizkassetten (12, 12' ...) ausgestattet ist und die Gesamtzahl an Zonen (10, 20 ...) größer ist als die Zahl derjenigen Zonen, mit denen die mehrere Zonen abdeckende Heizkassette (12) verbunden ist.

10. Mehrzonenofen nach einem der vorstehenden Ansprüche, **dadurch gekennzeichnet, dass** die Heizkassetten (12, 12' ...) in der Weise ausgelegt sind, das einzelne Zonen auf einem Temperaturniveau gehalten werden können, das in einem Bereich von 50°C bis 500°C liegt, vorzugsweise in einem Bereich von 100°C bis 350°C.

11. Katalyseapparatur umfassend den Mehrzonenofen nach einem der Ansprüche 1 bis 9.

12. Verfahren zur Untersuchung von Katalysatoren, **dadurch gekennzeichnet, dass** es mittels einer Katalyseapparatur nach Anspruch 11 durchgeführt wird.

13. Verwendung des Mehrzonenofens nach einem der Ansprüche 1 bis 9 im Laborbereich und dabei insbesondere für katalytische Teststände.

## Claims

1. Multi-zone furnace for catalysis apparatuses, comprising a frame structure (14) provided with insulating plates (17, 17' ...), wherein the frame structure defines at least one chamber (01) which has two or more zones (10, 20 ...) at differing temperatures which are separated from one another by at least one insertion element (15), **characterized in that** at least one insertion element contains at least one feed-through, wherein a feed-through makes it possible to achieve a thermally shielded connection between individual furnace zones or else between the outer region and the inner region of the furnace.

2. Multi-zone furnace according to Claim 1, **characterized in that** two or more zones (10, 20 ...) are each operatively connected to at least one heating cartridge (12, 12' ...).

3. Multi-zone furnace according to either of the preceding claims, **characterized in that** the heating cartridges (12, 12' ...) are connected to the multi-zone furnace detachably from the outside.

4. Multi-zone furnace according to one of the preceding claims, **characterized in that** the heating cartridges (12, 12' ...) comprise a heating device and/or a cooling device.

5. Multi-zone furnace according to one of the preceding claims, **characterized in that** the heating cartridges (12, 12' ...) are designed in such a manner that they form part of a flap or door or are themselves a flap or a door.

6. Multi-zone furnace according to one of the preceding claims, **characterized in that** at least one insertion element is attached to the side walls of the furnace chamber such that it can be moved by means of sliding rails.

7. Multi-zone furnace according to one of the preceding claims, **characterized in that** the wall thickness of the insulating plates (17, 17' ...) lies in a range of 1 to 10 cm.

8. Multi-zone furnace according to one of the preceding claims, **characterized in that** at least two heating cartridges (12, 12' ...) differ from one another in terms of dimensioning and in terms of the performance characteristics.

9. Multi-zone furnace according to one of the preceding claims, **characterized in that** at least one individual heating cartridge (12) is operatively connected to a plurality of zones (10, 20 ...) of the furnace, with the proviso that the furnace is equipped with two or more heating cartridges (12, 12' ...) and the total number of zones (10, 20 ...) is greater than the number of zones to which the heating cartridge (12) covering a plurality of zones is connected.

10. Multi-zone furnace according to one of the preceding claims, **characterized in that** the heating cartridges (12, 12' ...) are designed in such a manner that individual zones can be kept at a temperature level which lies in a range of 50°C to 500°C, preferably in a range of 100°C to 350°C.

11. Catalysis apparatus comprising the multi-zone furnace according to one of Claims 1 to 9.

12. Method for examining catalysts, **characterized in that** it is carried out by means of a catalysis apparatus according to Claim 11.

13. Use of the multi-zone furnace according to one of Claims 1 to 9 in the laboratory sector and in this respect in particular for catalytic test facilities.

## Revendications

1. Four multizones pour des appareillages de catalyse, comprenant une structure de châssis (14) munie de plaques isolantes (17, 17' ...), la structure de châssis définissant au moins un compartiment (01) qui présente deux zones (10, 20 ...) ou davantage, de température différente, séparées entre elles par au moins un élément d'insert (15), **caractérisé en ce qu'**au moins un élément d'insert renferme au moins un passage traversant, un passage traversant permettant une liaison formant bouclier thermique entre des zones individuelles du four ou respectivement également entre la zone extérieure et la zone intérieure du four.

2. Four multizones selon la revendication 1, **caractérisé en ce que** deux zones (10, 20 ...) ou davantage sont respectivement en liaison active avec au moins une cassette de chauffage (12, 12' ...).

3. Four multizones selon l'une des revendications précédentes, **caractérisé en ce que** les cassettes de chauffage (12, 12' ...) sont reliées de manière amovible, de l'extérieur, au four multizones.

4. Four multizones selon l'une des revendications précédentes, **caractérisé en ce que** les cassettes de chauffage (12, 12' ...) comprennent un dispositif chauffant et/ou un dispositif de refroidissement.

5. Four multizones selon l'une des revendications précédentes, **caractérisé en ce que** les cassettes de chauffage (12, 12' ...) sont configurées de manière à faire partie intégrante d'une trappe ou d'une porte, ou bien de manière à former elles-mêmes une trappe ou une porte.

6. Four multizones selon l'une des revendications précédentes, **caractérisé en ce qu'**au moins un élément d'insert est monté de manière mobile, au moyen de rails de coulissement, sur les parois latérales du compartiment de four.

7. Four multizones selon l'une des revendications précédentes, **caractérisé en ce que** l'épaisseur de paroi des plaques isolantes (17, 17' ...) se situe dans une plage de 1 à 10 cm.

8. Four multizones selon l'une des revendications précédentes, **caractérisé en ce qu'**au moins deux cassettes de chauffage (12, 12' ...) se différencient quant au dimensionnement et aux caractéristiques de puissance.

9. Four multizones selon l'une des revendications précédentes, **caractérisé en ce qu'**au moins une cassette de chauffage (12) individuelle est en liaison active avec plusieurs zones (10, 20 ...) du four, dans la mesure où le four est équipé de deux cassettes de chauffage (12, 12' ...) ou davantage, et où le nombre global de zones (10, 20 ...) est supérieur au nombre des zones avec lesquelles est reliée la cassette de chauffage (12) couvrant lesdites plusieurs zones.

10. Four multizones selon l'une des revendications précédentes, **caractérisé en ce que** les cassettes de chauffage (12, 12' ...) sont conçues de manière à ce que des zones individuelles puissent être maintenues à un niveau de température, qui se situe dans une plage de 50°C à 500°C, de préférence dans une plage de 100°C à 350°C.

11. Appareillage de catalyse comprenant le four multizones selon l'une des revendications 1 à 9.

12. Procédé d'analyse de catalyseurs, **caractérisé en ce qu'**il est effectué au moyen d'un appareillage de catalyse selon la revendication 11.

13. Utilisation d'un four multizones selon l'une des revendications 1 à 9, dans le domaine des laboratoires et ceci notamment pour les postes de test catalytique.
